# DEMANDE DE BREVET EUROPEEN

(11) **EP 2 017 316 A2**
(43) Date de publication de la demande: **21.01.2009**
(21) Numéro de dépôt: 08300238.6
(22) Date de dépôt: 16.07.2008
(51) Int. Cl.: C09J 7/02

(54) **Procédé et dispositif de contrôle de traçabilité et marquage de supports thermocollants**

(30) Priorité: 19.07.2007 FR 0705239
(71) Demandeur: STEP INTERNATIONAL, 42180 Andrezieux Boutheon (FR)
(72) Inventeur: Rozier-Chabert, Alain, 42390 VILLARS (FR); Rozier-Chabert, Christian, 42480 LA FOUILLOUSE (FR)
(74) Mandataire: Dupuis, François

(57) **Abrégé**

Le procédé est remarquable en ce qu'il consiste à fabriquer des supports thermocollants (S) incluant un film thermoplastique associé à une couche polymère additionnelle (5) dans laquelle est intégré un additif (A) réactif à un rayon laser avec modification de son apparence, à faire passer un rayon laser sur le support pour révéler des configurations et formes correspondants aux indications de marquage et de traçabilité souhaitée, et en ce que l'additif (A) a pour propriété d'être révélé par modification d'apparence dans les seules zones touchées par une émission laser du type YAG, dans la ou les configurations de marquage et de traçabilité souhaitées, les autres zones incluant l'additif restant invisibles.

## Description

L'invention se rattache au secteur technique des supports thermocollants qui sont destinés à être en partie transformés par marquage à chaud sur des articles textiles (T) et similaires. La technologie de ce type de support a largement été développée par de nombreuses entreprises, les applications et besoins étant assez considérables.

Ces supports thermocollants sont considérés comme étant des substrats complexes multicouches imprimables ou non et lors de leur fabrication, ils sont produits en bobines mères de grand diamètre, et donc avec une très grande longueur de déroulement. En pratique, ces bobines mères sont ensuite, en fonction des besoins et contraintes de distribution, elles-mêmes déroulées, inspectées, triées et réenroulées sur des mandrins supports en carton ou autre matériau pour constituer des bobineaux d'importance moindre, mais pouvant offrir des longueurs de supports thermocollants de l'ordre de 20 à 50 mètres pour mieux correspondre aux besoins des clients.

Par ailleurs, la largeur des bobines mères est très variable mais peut aller jusqu'à 1.500 mm et dans cette situation, la largeur de fabrication est dans la plupart des cas supérieure aux capacités des machines des utilisateurs. Il faut donc prévoir un découpage en largeur des bobines en des bobineaux de plus faible largeur par exemple 500 mm ou 700 mm.

En pratique, de nombreuses interventions sont donc nécessaires pour adapter et livrer les bobineaux de supports thermocollants pour correspondre aux besoins des utilisateurs.

Si l'on considère par ailleurs que les caractéristiques et propriétés des supports thermocollants peuvent varier selon les besoins, on obtient un nombre conséquent de « produits » qu'il va falloir gérer en terme d'identification de produits, et ce, dans le cadre d'une exigence de traçabilité des produits depuis leur fabrication jusqu'à leur stockage et vente. Cette traçabilité est effectuée à la connaissance du Demandeur essentiellement par le biais d'étiquettes adhésives qui sont préremplies, avec en particulier des mentions comme celles relatives à l'identification du produit, le numéro de lot de fabrication, la date de fabrication.

Cette gestion est rendue complexe par le nombre de gammes de produits existant, mais aussi par le fait que les étiquettes adhésives rapportées sur le support peuvent être soumises à des aléas, tels qu'oublis de marquage, inversion des étiquettes, décollage de celles-ci. Il y a donc des sources d'erreurs nombreuses et en final au détriment des clients utilisateurs et des fabricants.

Par ailleurs, si les étiquettes disparaissent ou sont détériorées lors de manipulations, l'identification du fabricant devient très aléatoire, voire impossible.

Face à ce genre de problèmes, et par rapport à la diversité de fabrication des supports thermocollants, différentes recherches ont été menées pour améliorer les conditions et modalités de marquage des supports thermocollants.

Pour comprendre les contraintes techniques à maîtriser, il y a lieu rapidement de revenir sur les caractéristiques structurelles desdits supports thermocollants connus à la base de l'invention.

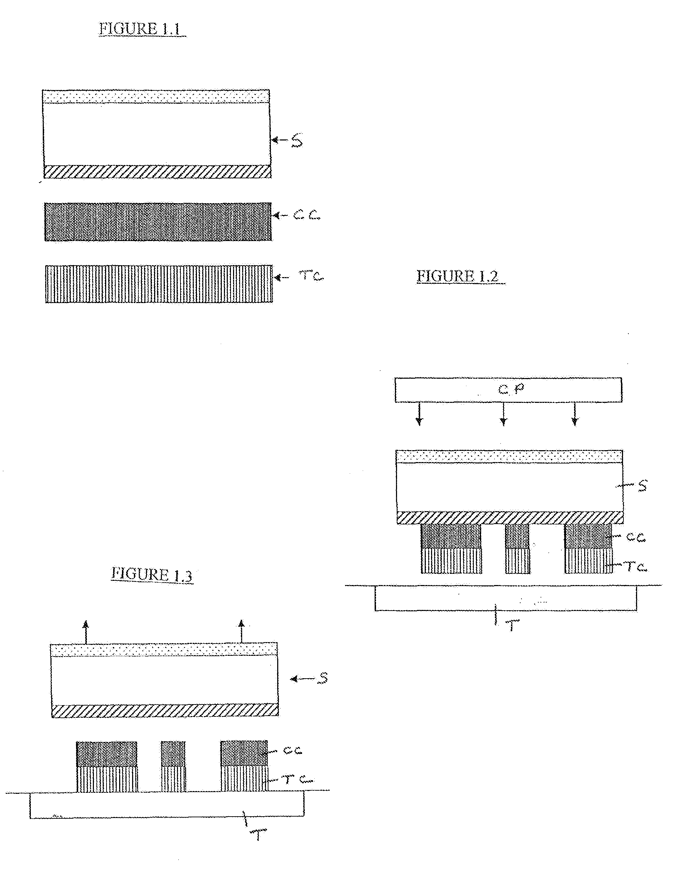

On distingue ainsi des supports thermocollants sous forme de substrats complexes découpables illustrés par exemple aux figures 1.1, 1.2 et 1.3 des dessins. Le substrat est composé généralement de trois éléments composants à savoir :
- un support (S) constitué d'un film thermoplastique, du type polyester terephalate qui présente à la fois une transparence nécessaire au bon fonctionnement du marquage et la résistance à la température de pressage (généralement utilisée) qui est de l'ordre de 120 à 200° C.
- une couche colorée (CC) constituée d'un film en différents matériaux possibles, tels que polychlorure de vinyle, polyuréthane, divers polymères ou complexes floqués.
- une couche thermocollante (TC) en copolyester, copolyamide, polyuréthane ou similaire.

Chacun des éléments ci-dessus peut être lui-même constitué de plusieurs matières, assemblées par collage, extrusion, enduction ou autre procédé.

Les trois éléments sont généralement assemblés selon les procédés suivants :
1. Couche colorée (CC) sur support (S) : par extrusion-lamination, ou enduction, ou par adhésivage du support et lamination des deux substrats.
2. Couche thermocollante (TC) sur couche colorée (CC) : par calandrage à chaud, extrusion-lamination, ou par enduction.

Les ordres d'assemblage sont variables selon les fabricants, ils peuvent être séparés ou simultanés.

On a représenté, figures 1.2 et 1.3, le principe d'utilisation des substrats complexes découpables.

Figures 1.2, on a représenté l'effet de chaleur et de pression référencé par CP, et figure 1.3 l'utilisation du substrat complexe découpable, le support étant enlevé.

Le substrat complexe ainsi obtenu est découpé à mi-chair par un plotter piloté par ordinateur et pressé à chaud sur le support textile après l'opération d'échenillage consistant à enlever les pourtours de lettres et logos.

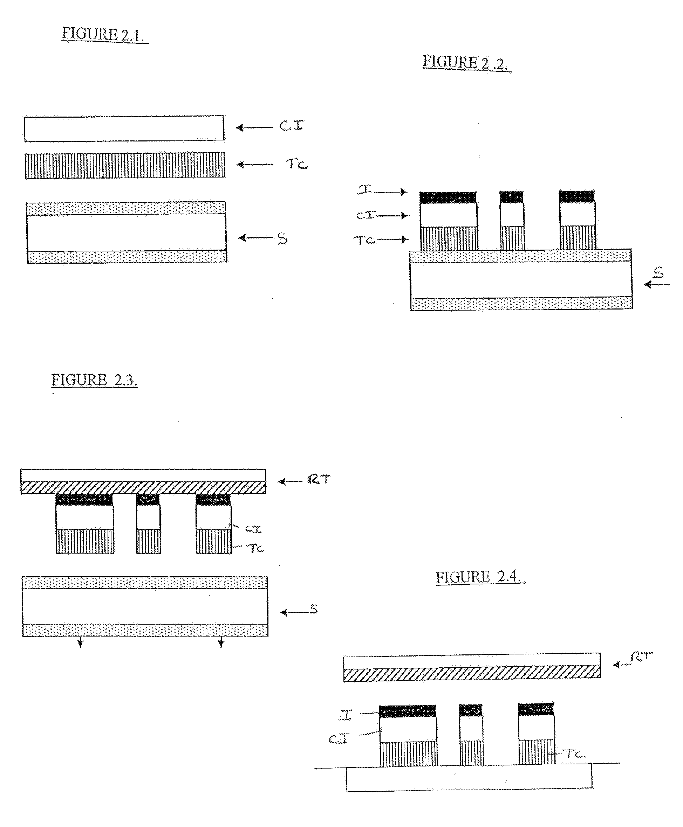

Dans une autre configuration illustrée figures 2.1, 2.2, 2.3, 2.4, les supports thermocollants peuvent être établis sous forme de substrats complexes imprimables et découpables avec trois éléments composants, à savoir :
- une couche imprimable (C1) de couleur claire, une couche thermocollante (TC),
- un support (S) transparent ou opaque constitué par un complexe à base de papier ou de polyester. Ce support peut être revêtu de couche « release » à pouvoir antiadhésif contrôlé aussi bien sur la face orientée vers la couche thermocollante que sur l'autre face.

Dans les milieux professionnels concernés, la couche dite « release » signifie une couche à pouvoir anti-adhésif contrôlé. Tel sera le sens dans la suite de la description.

La couche imprimable (CI) peut être en polychlorure de vinyle, polyuréthane ou copolymère blanc ou autre. La couche thermocollante (TC) est de même nature que précédemment.

Le substrat ainsi composé est imprimé par jet d'encre ou par sérigraphie ou par transfert thermique ou autre puis découpé par plotter. Les parties non imprimées sont échenillées et les parties utilisées sont transférées sur le support textile soit directement, soit à l'aide d'un ruban transfert (RT) d'application et sont ensuite pressées à chaud. Les parties imprimées sont identifiées par I.

A partir de la conception de ces substrats, les problèmes liés à la nécessité d'une traçabilité optimisée sont les suivants.

Pour la première catégorie des substrats complexes découpables, le marquage par impression jet d'encre, sérigraphie, transfert thermique flexographie permet l'apport d'encre en surface qui ne peut être appliquée que sur la face extérieure du support (S) ou de la couche thermocollante. En pratique, il est risqué d'imprimer la couche thermocollante, car le marquage risque d'être visible par transparence après pressage à chaud sur le textile. Egalement, l'impression sur la face externe du support (S) est rendue difficile, car cette face est rendue volontairement glissante par l'enduction d'une couche release à pouvoir anti-adhésif. Cette couche release a une fonction particulière nécessaire pour permettre le glissement des spires de la bobine mère ou des bobineaux et assurer une bonne qualité de réembobinage.

Les impressions qui seraient effectuées sur la couche externe sur support (S), releasé ou non, présentent le risque, lors des pressages répétés effectués par l'utilisateur final, de maculer peu à peu le plateau chauffant de la presse, puis d'être malencontreusement transférés sur le textile.

S'agissant de la seconde catégorie des substrats complexes imprimables et découpables, l'impression d'identification ne peut être placée sur la face imprimable qui est la face visible du produit après pressage. Cette impression de traçabilité ne peut être placée sur la face externe du support (S) qui est enduit d'une couche release permettant le glissement des spires comme déjà indiqué pour le cas précédent. Il y a des risques élevés de transfert d'encre sur la face imprimable de couleur claire avec laquelle elle est en contact pendant tout le stockage entre la fabrication et l'utilisation, soit dans des délais de temps pouvant être conséquents.

Ainsi, les différentes démarches effectuées selon l'art antérieur à la connaissance du déposant pour ce type d'impression n'ont pas permis d'aboutir à une solution satisfaisante.

Certains fabricants se sont orientés alors sur une autre possibilité de marquage laser de type CO2. Les essais et tentatives effectuées ont été peu fructueuses et de piètre qualité dans leur résultat avec en particulier une détérioration des films.

C'est donc en considérant toutes ces contraintes, études, que le déposant a recherché une solution qui permette de répondre de manière très satisfaisante au problème posé.

Le Demandeur s'est orienté différemment par rapport aux conditions de fabrication des supports thermocollants et des conditions actuelles d'impression qui sont comme il apparaît par le rappel de l'art antérieur effectuées en aval de la fabrication du support thermocollant.

En d'autres termes, la démarche du Demandeur a donc été de reconsidérer complètement le processus de fabrication des supports thermocollants et de l'impression des zones nécessaires à l'identification pour leur traçabilité. La solution apportée offre de grands avantages sans nuire à la qualité des produits obtenus.

Selon une première caractéristique, le procédé de fabrication des supports thermocollants sous forme de substrats complexes découpables imprimables ou non du type comprenant trois éléments constitués par un support constitué d'un film thermoplastique, d'une couche colorée ou imprimée et d'une couche thermocollante, est remarquable en ce qu'il consiste à fabriquer des supports thermocollants incluant un film thermoplastique associé à une couche polymère additionnelle dans laquelle est intégré un additif réactif à un rayon laser avec modification de son apparence, à faire passer un rayon laser sur le support pour révéler des configurations et formes correspondants aux indications de marquage et de traçabilité souhaitée, et en ce que l'additif ayant pour propriété d'être révélé par modification d'apparence dans les seules zones touchées par une émission laser du type YAG, dans la ou les configurations de marquage et de traçabilité souhaitées, les autres zones incluant l'additif restant invisibles.

Selon une autre caractéristique de l'invention, le support thermocollant mettant en oeuvre le procédé selon la revendication 1 constituant des complexes découpables imprimables ou non du type comprenant trois éléments, un support constitué d'un film thermoplastique, une couche colorée ou couche imprimée et une couche thermocollante, est remarquable en ce qu'il comprend un film polyester sans additif et une couche polymère additionnelle incorporant l'additif, et en ce que, de part et d'autre de l'ensemble film - couche polymère, avec additif, sont disposées une couche release supérieure et une couche release ou adhésif inférieur, et en ce que l'ensemble est associé d'une part avec la couche colorée ou la couche imprimable et d'autre part la couche thermocollante

Ces caractéristiques et d'autres encore ressortiront bien de la suite de la description.

Pour fixer l'objet de l'invention illustrée d'une manière non limitative aux figures des dessins où :
- La figure 1.1 est une vue à caractère schématique d'un substrat complexe découpable avant assemblage de ses composants, selon l'art antérieur.
- La figure 1.2 est une vue à caractère schématique du substrat, selon la figure 1.1 après découpe et échenillage.
- La figure 1.3 est une vue du même substrat après pressage à chaud.
- La figure 2.1 est une vue à caractère schématique d'un substrat complexe imprimable et découpable avant assemblage de ses composants selon l'art antérieur.
- La figure 2.2 est une vue du substrat selon la figure 1 après impression, découpage et échenillage.
- La figure 2.3 est une vue du substrat, selon la figure 2.2 pendant le transfert par ruban d'application.
- La figure 2.4 est une vue du substrat selon la figure 2.3 après pressage à chaud.
- La figure 3.1 est une vue à caractère schématique du substrat complexe découpable, selon l'invention, représenté avant assemblage de ses composants dans une première variante.
- La figure 3.2 est une vue à caractère schématique du substrat complexe découpable selon l'invention dans une seconde variante.
- La figure 4.1 est une vue à caractère schématique du substrat complexe imprimable et découpable selon l'invention dans une première variante.
- La figure 4.2 est une vue à caractère schématique du substrat complexe imprimable et découpable selon l'invention dans une seconde variante.

Afin de rendre plus concret l'objet de l'invention, on le décrit maintenant d'une manière non limitative illustrée aux figures des dessins.

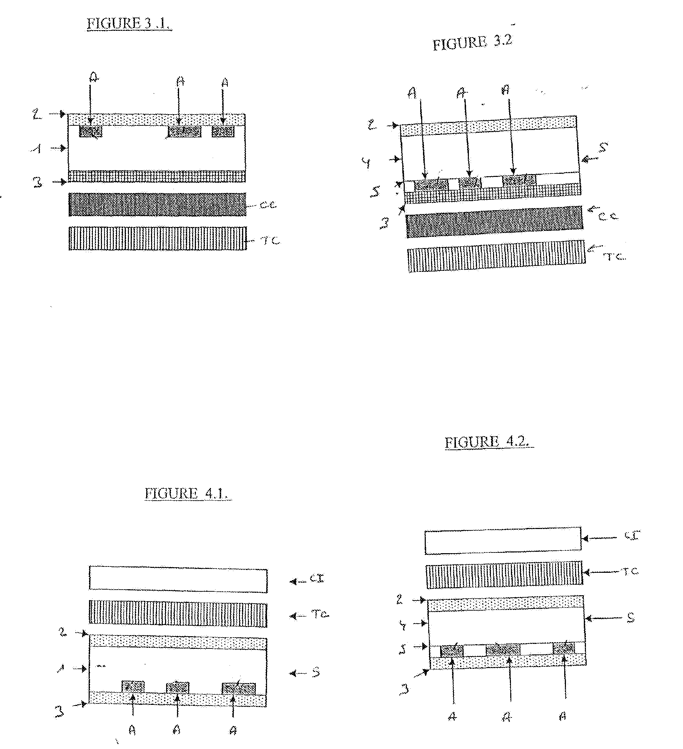

Le procédé de fabrication des supports thermocollants sous forme de substrats complexes découpables ou non sont du type comprenant trois éléments constitués par un support constitué d'un film thermocollant (S), d'une couche colorée (CC) ou imprimée (CI) et d'une couche thermocollante (TC). Selon l'invention, le support (S) inclut, lors de sa fabrication, un additif (A) ayant pour propriété d'être révélé par modification d'apparence dans les seules zones touchées par une émission laser du type YAG permettant de faire apparaître la configuration de marquage sous toutes formes appropriées de combinaison de lettres et chiffres, logos, et de manière générale tous ensembles d'informations écrites et/ou visuelles permettant d'obtenir une traçabilité sur l'origine des produits, les autres zones restent invisibles. L'additif (A) révélateur est introduit lors de la fabrication du support de manière continue. Cet additif révélateur est, par exemple, celui commercialisé par la Société MERCK sous la marque enregistrée « LAZERFLAIR » et il est choisi en fonction des caractéristiques du support. On a représenté, aux figures 3.1, 3.2, 4.1, 4.2, différentes mises en oeuvre de l'invention.

Selon la figure 3.1, le support (S) comprend un film polyester (1) avec additif (A) et, de part et d'autre du film, une couche release supérieure (2) et une couche release ou adhésif (3) inférieur, le support étant associé à la couche colorée (CC) et à la couche thermocollante (TC). On a représenté, à titre d'exemple, les zones devenues apparentes par la réaction de l'additif au rayon laser, l'additif se trouvant dans le film (1).

Selon la figure 3.2, le support (S) inclut un film en polyester (4) sans additif et on inclut, lors de la fabrication, une couche polymère additionnelle (5) incorporant l'additif (A). De part et d'autre de l'ensemble film (4)-couche polymère (5) avec additif, on rajoute une couche release supérieure (2) et une couche release ou adhésif (3) inférieur, l'ensemble étant associé avec la couche colorée (CC) et la couche thermocollante (TC). On a représenté, à titre d'exemple, les zones devenant apparentes par la réaction de l'additif au rayon laser, l'additif se trouvant dans la couche additionnelle. Dans cette mise en oeuvre, l'épaisseur de la couche de polymère (5) est de l'ordre de 10 à 20 microns, c'est-à-dire selon une épaisseur moindre que l'épaisseur du film (4) qui est de l'ordre de 75 à 100 microns.

Le choix de l'additif révélateur (A) sera fonction des caractéristiques du support et de la couche additionnelle réceptrice.

En se référant à la figure 4.1, le support est toujours conçu comme représenté figure 3.1, d'un film polyester (1) avec additif (A), d'une couche release supérieure (2) et d'une couche release ou adhésif (3) inférieur, l'ensemble étant associé à une couche thermocollante (TC) et une couche imprimable (CI). La solution de la figure 4.2 est semblable à celle de la figure 3.2 avec le support (S) comprenant le film polyester (4) sans additif, une couche additionnelle de polymère (5) avec additif (A) et, de part et d'autre, les couches release supérieure (2) et inférieure (3). L'ensemble est associé à la couche thermocollante (TC) et à la couche imprimable (CI). On a représenté, à titre d'exemple, les zones devenant apparentes par la réaction de l'additif au rayon laser se trouvant dans le film, figure 4.1, et dans la couche additionnelle, figure 4.2.

Ainsi, le procédé, selon l'invention, offre de nombreux avantages par rapport à l'art antérieur.

L'introduction de l'additif révélateur, lors de la fabrication du support (S), offre de grands avantages quant à la qualité des produits obtenus. L'additif est en quelque sorte noyé soit dans le film polyester, soit dans la couche polymère additionnelle avec une répartition homogène sur toute la surface du support. Le passage du rayon laser du type YAG, selon une technologie connue, et avec programmation préalable, permet à l'additif révélateur (A) d'apparaître selon des formes de configuration préétablies en fonction des messages et informations voulus. La technique de marquage laser YAG permet par liaison au système informatique d'imprimer des textes et images à volonté. Ce peut être des éléments informatifs pour la traçabilité des produits obtenus, des textes techniques publicitaires ou autres et tout cela selon une programmation préalable. Les zones non touchées par le rayon laser restent inactives et n'entraînent aucune détérioration dans le temps du produit de même que les zones marquées. Le marquage est donc intégré au produit et on supprime tous les inconvénients de l'art antérieur. Lorsque les films thermocollants sont enroulés sur les bobines mères ou transférés sur les bobineaux, comme exposé dans le préambule de la demande, il n'y a aucun effet néfaste sur la qualité, les additifs n'étant pas actifs à cet instant. Ils ne le sont qu'au dernier moment chez le fabricant-assembleur des produits finis, lors de l'intervention du rayon laser permettant de révéler les signes selon la programmation établie et les informations souhaitées.

Il n'est pas possible d'effectuer les marquages de traçabilité au niveau de la fabrication des supports (S), et l'invention permet la mise en place et introduction des moyens ou additifs dans le support qui seront ultérieurement révélés par le fabricant-assembleur lors de l'opération de marquage avec le laser type YAG.

## Revendications

1. Procédé de fabrication des supports thermocollants sous forme de substrats complexes découpables imprimables ou non du type comprenant trois éléments constitués par un support (S) constitué d'un film thermoplastique, d'une couche colorée (CC) ou imprimée (CI) et d'une couche thermocollante (TC), **caractérisé en ce qu'**il consiste à fabriquer des supports thermocollants (S) incluant un film thermoplastique associé à une couche polymère additionnelle (5) dans laquelle est intégré un additif (A) réactif à un rayon laser avec modification de son apparence, à faire passer un rayon laser sur le support pour révéler des configurations et formes correspondants aux indications de marquage et de traçabilité souhaitée, **et en ce que** l'additif (A) a pour propriété d'être révélé par modification d'apparence dans les seules zones touchées par une émission laser du type YAG, dans la ou les configurations de marquage et de traçabilité souhaitées, les autres zones incluant l'additif restant invisibles.

2. Support thermocollant mettant en oeuvre le procédé selon la revendication 1 constituant des complexes découpables imprimables ou non du type comprenant trois éléments, un support (S) constitué d'un film thermoplastique, une couche colorée (CC) ou couche imprimée (CI) et une couche thermocollante (TC), **caractérisé en ce qu'**il comprend un film polyester (4) sans additif et une couche polymère additionnelle (5) incorporant l'additif (A),
**et en ce que,** de part et d'autre de l'ensemble film (4)-couche polymère (5), avec additif, sont disposées une couche release supérieure (2) et une couche release ou adhésif (3) inférieur,
**et en ce que** l'ensemble est associé d'une part avec la couche colorée (CC) ou la couche imprimable (CI) et d'autre part la couche thermocollante (TC).

3. Support, selon la revendication 2, **caractérisé en ce que** l'additif révélateur (A) est celui commercialisé par la Société MERCK sous la marque enregistrée LAZERFLAIR.
